# EUROPEAN PATENT SPECIFICATION

(11) **EP 1 099 625 B1**
(45) Date of publication and mention of the grant of the patent: **21.04.2004**
(21) Application number: 00500224.1
(22) Date of filing: 02.11.2000
(51) Int. Cl.: B64C 1/00

(54) **Aircraft lift arrangement**
Auftrieb erzeugende Vorrichtung für Flugzeuge
Eléments sustentateurs pour aéronefs

(30) Priority: 10.11.1999 ES 9902451
(43) Date of publication of application: 16.05.2001
(73) Proprietor: Munoz Saiz, Manuel, 04004 Almeria (ES)
(72) Inventor: Munoz Saiz, Manuel, 04004 Almeria (ES)

(56) References cited:
- WO-A-99/38770
- FR-A- 2 603 553
- US-A- 4 026 502
- US-A- 4 449 680
- US-A- 4 679 751
- HEINZ J. NOWARRA: "Die deutsche Luftrüstung 1933-1945" 5 July 1998 (1998-07-05) , BERNHARD & GRAEFE VERLAG , BONN XP002158849 isbn 3-8289-5315-8 * page 257 - page 258; figures 226,228 *

## Description

### Field of the invention:

On vertical fins or projections.

### Description of the prior art.

Aircraft lift enhancement involving inclined surfaces is for instance known from prior art document EP-A-0 827 905, current fins or vertical elements are inclined against the transversal axis to produce a downward force which reduces aircraft lift, all of which is corrected with the present invention.

### Brief summary of the invention.

The aircraft lift arrangement involves giving the fins or vertical elements, engine pylons and lateral portions of their cowls, fin units, launcher-tank, rocket, floats and skids mounts, struts or brackets, external cables and antennas a positive angle slope in relation to the forward edge or transverse axis both on the leading and trailing edges, both beginning at the upper front and descending in an incline rearward as far as the base, to produce an inclined force on said vertical element which is broken down into two components, one horizontal and rearward, providing resistance to the advance, and the other a vertical, ascendant or lift component.

This provides a twin benefit, on the one hand eliminating the downward force and on the other generating an upward force or lift of the same value. In other cases, the arrangement both generates lift and simultaneously reduces forward resistance.

The leading edge of these fins, mounts, etc. creates greater lift that the trailing edge with the same inclination.

The lift generated is generally high as such fins or vertical elements require a certain thickness in order to fulfil their aerodynamic profile role as well as to house ducting or control elements, etc., so that their cross-section or front area is greater.

It may also be used in sideways sloping fins.

Given the foregoing, it is advisable wherever feasible to use vertical fins or elements rather than horizontal types with this arrangement.

Advantages: on increasing its lift, its efficiency increases, it is simple and inexpensive.

### BRIEF DESCRIPTION OF THE DRWINGS

Figure 1 shows a partial side view of an aircraft without the arrangement of this invention.
Figure 2 shows a schematic, partial, side view of an aircraft with the arrangement of this invention.
Figure 3 and 5 show schematic, partial, side views of several variants.

### DETAILED DESCRIPTION OF THE INVENTION

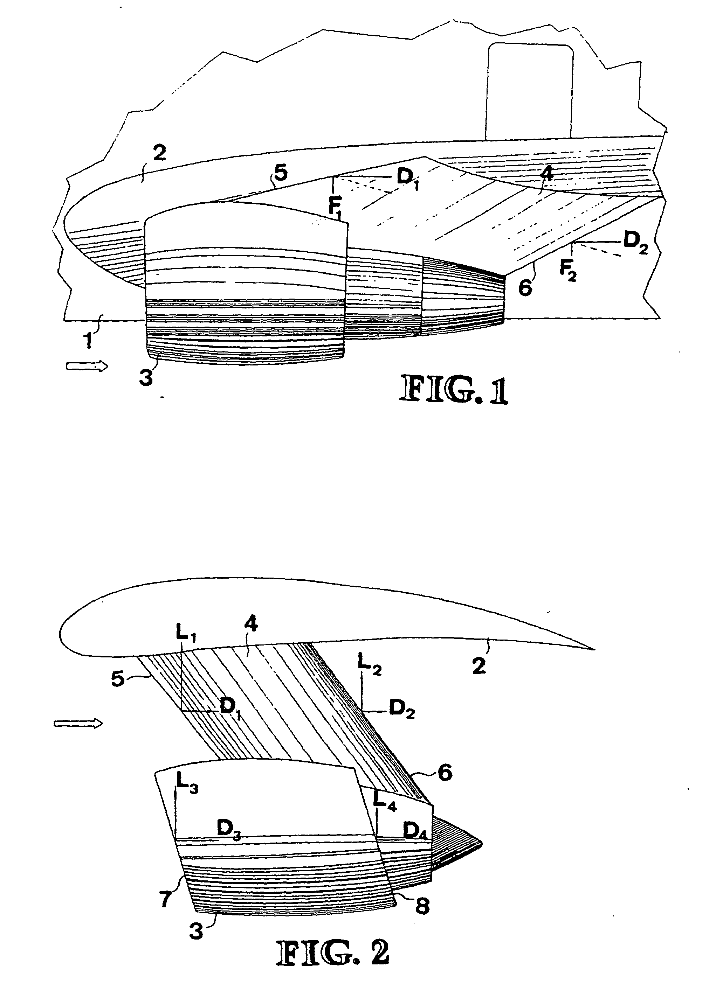

Figure 1 consists of the aircraft fuselage 1, the wing 2, the engine cowl 3, the pylon 4, the downward force F₁ and the resistance D₁ of the leading edge 5 and the downward force F₂ and the resistance D₂ of the trailing edge 6. Downward forces are the present drawbacks.
Figure 2 consists of the wing 2, the engine cowl 3, the pylon 4, the lift L₁ and the resistance D₁ of the leading edge 5 and the lift L₂ and resistance D₂ of the trailing edge 6, where the lift L₃ and the resistance D₃ of the side leading edges 7 and the lift L₄ and the resistance D₄ of the cowl trailing edge 8, both beginning at the upper front and descending in an incline rearward as far as the base, to produce an inclined force on said vertical element which is broken down into two components, one horizontal and rearward, providing resistance to the advance, and the other a vertical, ascendant or lift component.

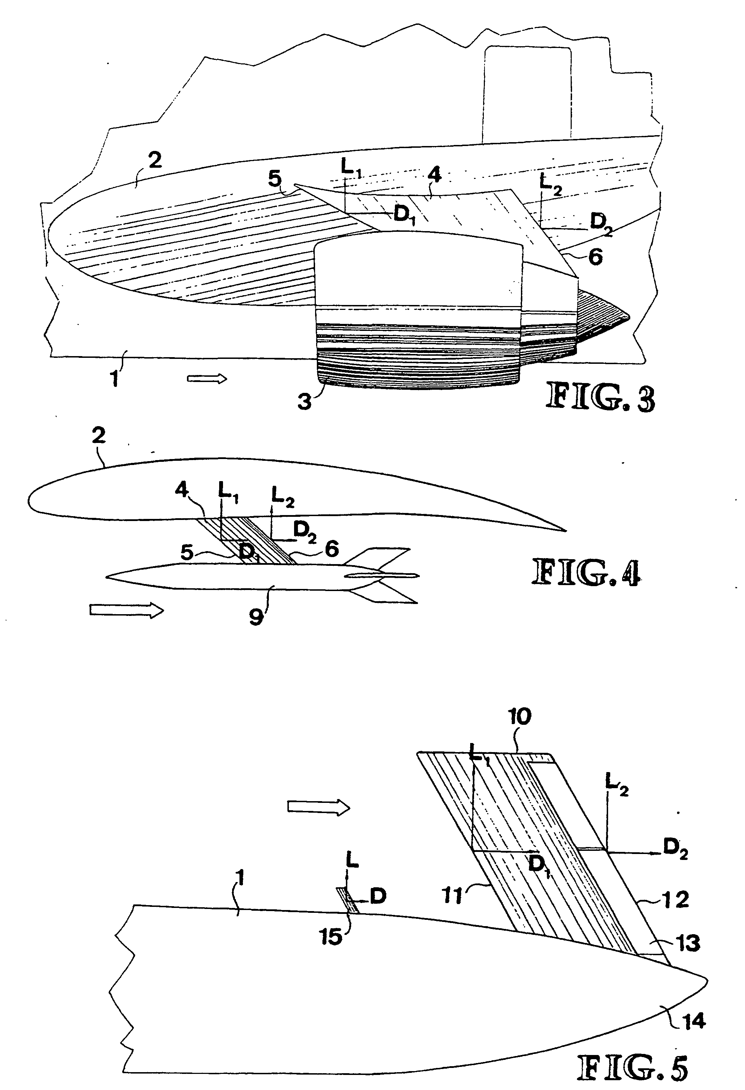

Figure 3 consists of the fuselage 1, the wing 2, the engine cowl 3, the pylon 4, the lift L₁ and the resistance D₁ of the leading edge 5 and the lift L₂ and the resistance D₂ of its trailing edge 6, it only shows the improvement on the pylon.
Figure 4 consists of the wing 2, the engine cowl 3, the rocket mount 4, the lift L₁ and the resistance D₁ of the leading edge 5 and the lift L₂ and the resistance D₂ of the trailing edge 6. This arrangement is also typical with launcher-tank, rocket, floats and skis mounts etc.
Figure 5 consists of the fuselage 1, the fin unit 10, the lift L₁ and the resistance D₁ of the leading edge 11 and the lift L₂ and the resistance D₂ of its trailing edge 12 on the rudders 13, the tail 14, and the lift L and the resistance D of the antenna 15.

The arrows indicate the airflow.

## Claims

1. A method of providing an aircraft lift arrangement that involves giving the fins or vertical elements (4,7,8 and 10), a positive angle slope in relation to the forward edge or transverse axis both on the leading and trailing edges, both beginning at the upper front (5, 6, 7 and 8) and descending in an incline rearward as far as the base, to produce an inclined force on said vertical element which is broken down into two components, one horizontal and rearward (D1, D2, D3 and D4), providing resistance to the advance, and the other a vertical, ascendant or lift component (L1, L2, L3 and L4).

2. A method as claimed in claim 1, wherein the fins and vertical elements are engine pylons (4 Figure 2).

3. A method as claimed in claim 1, wherein the fins and vertical elements are lateral portions of their cowls (7 and 8).

4. A method as claimed in claim 1, wherein the fins and vertical elements are fin units (10).

5. A method as claimed in claim 1, wherein the fins and vertical elements are rocket mounts (4, figure 4).

6. A method as claimed in claim 1, wherein the fins and vertical elements are launcher-tank mounts.

7. A method as claimed in claim 1, wherein the fins and vertical elements are aircraft float mounts.

8. A method as claimed in claim 1, wherein the fins and vertical elements are aircraft skis mounts.

9. A method as claimed in claim 1, wherein the fins and vertical elements are external cables and antennas (15).

10. A method as claimed in claim 1, wherein the fins are sideways sloping fins.

## Patentansprüche

1. Verfahren zur Erzielung einer tragenden Anordnung für Flugzeuge, die darin besteht, dass die Flügel oder vertikalen Elemente (4, 7, 8 und 10) in Bezug auf den vorderen Rand oder die Querachse in einem positiven Winkel geneigt werden, sowohl in bezug auf den Angriffs- als auch auf den Abströmrand, die beide im oberen vorderen Bereich (5, 6, 7 und 8) beginnen und geneigt nach hinten bis zur Grundfläche abfallen, um eine geneigte Kraft auf das vertikale Element auszuüben, das sich seinerseits in zwei Bestandteile zerlegt, und zwar in ein waagerechtes und nach hinten ausgerichtetes Teil (D1, D2, D3 und D4), das dem Vortrieb Widerstand bietet, und ein vertikales, aufsteigendes bzw. tragendes Teil (L1, L2, L3 und L4).

2. Verfahren nach Anspruch 1, **dadurch gekennzeichnet, dass** die Flügel oder vertikalen Elemente die die Pylons der Motoren sind (4. Figure 2).

3. Verfahren nach Anspruch 1, **dadurch gekennzeichnet, dass** die Flügel oder vertikalen Elemente die Seitenteile der Cowls (7 und 8) sind.

4. Verfahren nach Anspruch 1, **dadurch gekennzeichnet, dass** die Flügel oder vertikalen Elemente die vertikalen Stabilisierungsflügel (10) sind.

5. Verfahren nach Anspruch 1, **dadurch gekennzeichnet, dass** dass die Flügel oder vertikalen Elemente die Raketenhalter sind (4. figure 4).

6. Verfahren nach Anspruch 1, **dadurch gekennzeichnet, dass** die Flügel oder vertikalen Elemente die Halter der abwerfbaren Behälter sind.

7. Verfahren nach Anspruch 1, **dadurch gekennzeichnet, dass** die Flügel oder vertikalen Elemente die Halter der Flugzeugkabinen sind.

8. Verfahren nach Anspruch 1, **dadurch gekennzeichnet, dass** die Flügel oder vertikalen Elemente die Halter der Gleitschienen der Flugzeuge sind

9. Verfahren nach Anspruch 1, **dadurch gekennzeichnet, dass** die Flügel oder vertikalen Elemente die Aussenkabel und Antennen (15) sind.

10. Verfahren nach Anspruch 1, **dadurch gekennzeichnet, dass** die Flügel seitlich geneigt sind:

## Revendications

1. Un procédé procurant une disposition sustentatrice aux avions consiste à donner aux ailettes ou éléments verticaux (4, 7, 8 et 10) une inclinaison à angle positif par rapport au bord avant ou à son axe transversal, aussi bien à leur bord d'attaque qu'à leur bord de fuite, tous deux commençant dans la partie supérieure avant (5, 6, 7 et 8) et descendant en inclinaison vers l'arrière jusqu'à rejoindre la base, pour produire une force inclinée sur cet élément vertical, lequel est décomposé en deux composantes, l'une horizontale et vers l'arrière (D1, D2, D3 y D4), produisant une résistance à l'avancement, et l'autre verticale, ascendante ou de sustentation (L1, L2, L3 et L4).

2. Un procédé selon la revendication 1, **caractérisé en ce que** les ailettes et les éléments verticaux sont les pylônes des moteurs (4. Figure 2).

3. Un procédé selon la revendication 1, **caractérisé en ce que** les ailettes et les éléments verticaux sont les parties latérales de leurs capots. (7 et 8).

4. Un procédé selon la revendication 1, **caractérisé en ce que** les ailettes et les éléments verticaux sont les empennages verticaux (10).

5. Un procédé selon la revendication 1, **caractérisé en ce que** les ailettes et les éléments verticaux sont les supports de fusées (4, figure 4).

6. Un procédé selon la revendication 1, **caractérisé en ce que** les ailettes et les éléments verticaux sont les supports de réservoirs lançables.

7. Un procédé selon la revendication 1, **caractérisé en ce que** les ailettes et les éléments verticaux sont les supports des nacelles des avions.

8. Un procédé selon la revendication 1, **caractérisé en ce que** les ailettes et les éléments verticaux sont les supports des skis des avions.

9. Un procédé selon la revendication 1, **caractérisé en ce que** les ailettes et les éléments verticaux sont les câbles externes et les antennes. (15).

10. Un procédé selon la revendication 1, **caractérisé en ce que** les ailettes sont inclinées latéralement.
